# EUROPÄISCHE PATENTSCHRIFT

(11) **EP 3 583 993 B1**
(45) Veröffentlichungstag und Bekanntmachung des Hinweises auf die Patenterteilung: **30.09.2020**
(21) Anmeldenummer: 19178198.8
(22) Anmeldetag: 04.06.2019
(51) Int. Cl.: B01D 35/04, C02F 1/00, E03C 1/04

(54) **WASSERAUSLAUFARMATUR MIT TRINKWASSERFILTER**
WATER DRAIN FITTING WITH DRINKING WATER FILTER
ROBINETTERIE D'ÉCOULEMENT D'EAU POURVUE DE FILTRE À EAU POTABLE

(30) Priorität: 18.06.2018 DE 102018114581
(43) Veröffentlichungstag der Anmeldung: 25.12.2019
(73) Patentinhaber: Franke Technology and Trademark Ltd, 6052 Hergiswil (CH)
(72) Erfinder: Leutwiler, Markus, 5612 Villmergen (CH); Gloor, Roland, 5732 Zetzwil (CH); Kellenberger, Christoph, 8005 Zürich (CH); Loepfe, Michael, 8006 Zürich (CH)
(74) Vertreter: Lemcke, Brommer & Partner Patentanwälte Partnerschaft mbB

(56) Entgegenhaltungen:
- WO-A2-2012/140526
- DE-U1- 29 505 662
- FR-A- 633 782
- US-A- 4 504 389
- US-A- 5 753 118

## Beschreibung

Die vorliegende Erfindung betrifft eine multifunktionale Wasserauslaufarmatur zur wahlweisen Abgabe von Brauchwasser und gefiltertem Trinkwasser, welche einen Armaturenkörper mit mindestens einem Wasserzulauf, einen von dem Armaturenkörper abweisenden ersten Auslauf für Brauchwasser, einen von dem Armaturenkörper abzweigenden zweiten Auslauf für gefiltertes Trinkwasser und einen von Wasser durchströmbaren Filteraufnahmeraum für einen Trinkwasserfilter aufweist, der mit dem zweiten Auslauf in wasserführender Verbindung steht.

In vielen Gegenden entspricht die Qualität des Wassers aus der öffentlichen Wasserversorgung oder aus einer hauseigenen Wasserversorgung nicht den Hygieneanforderungen an Trinkwasser. In diesem Fall können Trinkwasserfilter eingesetzt werden, um im Brauchwasser enthaltene Verunreinigungen herauszufiltern. Bekannt sind zu diesem Zweck nachrüstbare Filteraufsätze, die auf die Mündungsöffnung des Wasserauslaufs einer Armatur aufgeschraubt oder aufgesteckt werden und einen entsprechenden Trinkwasserfilter enthalten. Derartige nachrüstbaren Filteraufsätze sind beispielsweise in den Dokumenten EP 0 798 424 A2, JP 2002/310357 A, JP 2002/331298 A, WO 1999/037375 A1 oder WO 1999/029391 A1 beschrieben. Solche auf den Auslauf einer Armatur aufgesetzte Anbaufilter sind jedoch sperrig und dadurch unpraktisch und sind bei normalem Gebrauch der Armatur im Wege wie z.B. bei der Entnahme von Brauchwasser zum Abspülen oder Händewaschen.

Daneben sind Armaturen bekannt, die einen integrierten Trinkwasserfilter aufweisen. Beispielsweise zeigt die EP 2 249 942 B1 eine Armatur mit im Armaturenkörper integriertem Filter. Die Schrift US 2014/0215709 A1 beschreibt eine Armatur mit einem separaten Abgang am Armaturenkörper, auf den eine nach oben weisende Filterkartusche aufgesetzt werden kann, an der ein separater Auslauf für gefiltertes Wasser angebracht wird. Über diese Armatur kann somit wahlweise Brauchwasser und gefiltertes Trinkwasser entnommen werden.

Die in der WO 2013/044339 A1 beschriebene Armatur besitzt ebenfalls einen im Armaturenkorpus aufgenommenen Filter. Am Armaturenkorpus sind zwei Ausläufe angeordnet, aus denen wahlweise Brauchwasser und gefiltertes Trinkwasser entnommen werden kann. Auch die WO 2012/029412 A1 zeigt schematisch eine Armatur mit einem Auslauf für Brauchwasser, einen Filter sowie einen von dem Filter abgehenden separaten Auslauf für gefiltertes Wasser.

Nachteilig an solchen Armaturen mit integriertem Trinkwasserfilter ist, dass hinter dem Filter jeweils wasserführende Teile der Armatur wie insbesondere Ventile, ein rohrförmiger Auslauf, oder im Armaturenkörper ausgebildete Wasserwege folgen, in denen sich Keime ansiedeln können, die das gefilterte Wasser verunreinigen. Eine solche Keimbildung innerhalb der Armatur kann insbesondere in warmen Gegenden problematisch sein. Gefiltertes Trinkwasser könnte daher hinter dem Filter unbemerkt mit Krankheitskeimen kontaminiert werden.

Die Schrift FR 633 782 A beschreibt eine Armatur mit einen von einer Armatur abzweigenden, mit einem eigenen Ventil versehenen und zu einem Filtergehäuse führenden Auslauf.

Die Schrift US 5 753 118 A zeigt eine Armatur mit einem Auslauf für Brauchwasser, der mit einem Einhebelmischer versehen ist, sowie eine zu einem Filtergehäuse führenden Abzweig, der mit einem separaten Schließventil versehen ist. Das Filterwasser wird über einen von dem Filter wegführenden, eigenen Auslauf ausgegeben.

In der US 4 504 389 A beschreibt ein Filtersystem, welches auf einen Wasserauslauf aufgeschraubt wird.

Es ist daher eine Aufgabe der vorliegenden Erfindung, eine Wasserauslaufarmatur zur wahlweisen Abgabe von Brauchwasser und gefiltertem Trinkwasser anzugeben, welche einerseits im Hinblick auf die Bedienbarkeit, andererseits im Hinblick auf die Hygiene und Sicherheit, verbessert ist.

Die Aufgabe wird gelöst durch die Merkmale des Anspruchs 1. Vorteilhafte Ausgestaltungen sind den abhängigen Ansprüchen zu entnehmen.

Bei einer Wasserauslaufarmatur der eingangs genannten Art ist erfindungsgemäß vorgesehen, dass der Filteraufnahmeraum von einem Filtergehäuse gebildet wird, das an dem von dem Armaturenkörper abgewandten Ende des zweiten Auslaufs angeordnet ist, und das Filtergehäuse einen nach unten weisenden Boden aufweist, in welchem eine Mündungsöffnung ausgebildet ist, aus der gefiltertes Trinkwasser entnehmbar ist. Gemäß der vorliegenden Erfindung ist somit vorgesehen, dass das gefilterte Trinkwasser direkt aus dem Filtergehäuse ausfließt und entnommen wird, so dass jede Keimbildung in einem daran anschließenden Wasserweg vermieden wird.

Am Armaturenkörper ist herkömmlicher Weise ein Ventileinsatz mit einem ersten Ventil zur Regelung eines Wasserflusses von Brauchwasser aus dem ersten Auslauf vorgesehen. Der Armaturenkörper weist hierbei einen ersten Wasserweg von dem ersten Ventil zu dem ersten Auslauf auf.

Außerdem ist zwischen dem zweiten Auslauf und dem Filtergehäuse ein Schließventil zum Absperren und Freigeben einer Ausgabe von gefiltertem Wasser angeordnet. Erfindungsgemäß weist der Armaturenkörper hierzu einen zweiten Wasserweg von dem Wasserzulauf unter Umgehung des ersten Ventils zu dem zweiten Auslauf auf.

Somit kann am Armaturenkörper in herkömmlicher Weise das Brauchwasser an- und abgedreht werden. Trinkwasser wird dagegen direkt am Filtergehäuse abgezapft, welches zu diesem Zweck mit dem genannten Schließventil versehen ist. Am Armaturenkörper müssen somit keine zwei separaten Schließventile für Brauchwasser und gefiltertes Trinkwasser oder ein entsprechender Umsteller vorgesehen sein, was die Bedienung der Armatur erleichtert. Das Schließventil am Filtergehäuse ist somit auch eindeutig der Funktion zur Ausgabe von gefiltertem Trinkwasser zugeordnet, was die Armatur intuitiv leicht bedienbar macht.

Ein solches Schließventil kann insbesondere direkt am Filtergehäuse in dessen oberen, zulaufseitigen Bereich angeordnet sein. Das Filtergehäuse oder ein für das Filtergehäuse vorgesehener Befestigungssockel am zweiten Auslauf bietet genügend Platz, um neben einer Filterpatrone außerdem eine entsprechende Ventilkartusche aufzunehmen.

Außerdem ist zwischen dem zweiten Auslauf und dem Filtergehäuse ein Rückschlagventil mit einem Absperrelement angeordnet, welches durch eine in das Filtergehäuse eingesetzte Filterpatrone in einer Öffnungsstellung gehalten wird, in der ein Wasserweg von dem zweiten Auslauf in das Filtergehäuse freigegeben ist, und welches bei Fehlen einer Filterpatrone unter Wirkung einer Schließfeder oder des Wasserdrucks in eine Schließstellung bewegt wird, in der es den Wasserweg zwischen zweitem Auslauf und Filtergehäuse versperrt. Ein solches Rückschlagventil verhindert einerseits, dass beim Öffnen des Filtergehäuses, beispielsweise zwecks Austausch der Filterpatrone, Wasser ausströmen kann. Außerdem verhindert das Rückschlagventil, dass bei Fehlen einer Filterpatrone Wasser entnommen werden kann. Die Ausgabefunktion für gefiltertes Trinkwasser ist somit blockiert, solange keine Filterpatrone eingesetzt ist, sodass ein Benutzer nicht versehentlich im Vertrauen darauf, es sei eine Filterpatrone vorhanden, ungefiltertes Wasser als Trinkwasser entnehmen könnte.

Bei einer bevorzugten Ausführungsform ist vorgesehen, dass das Filtergehäuse als ein vorzugsweise zylinderförmiges Gehäuse mit gegenüber dem zweiten Auslauf vergrößerten Querschnitt ausgebildet ist, in dessen oberen Bereich der zweite Auslauf einmündet. Das Filtergehäuse wird somit im Wesentlichen in vertikaler Richtung durchströmt und bietet ausreichend Platz zur Aufnahme einer Filterpatrone.

Vorzugsweise ist das Filtergehäuse zylindrisch ausgebildet, derart, dass Wasser von dem zweiten Auslauf in einen äußeren Ring umströmt, eine in das Filtergehäuse eingesetzte zylindrische Filterpatrone durchdringt und in axialer Richtung mittig aus der im Boden des Filtergehäuses ausgebildeten Mündungsöffnung austritt. Die radialsymmetrische, insbesondere zylindrische Form von Filterpatrone und Filtergehäuse ist bevorzugt, da hierbei die Filterpatrone von außen angeströmt und das gefilterte Wasser direkt aus dem axialen Innenraum des Filters entnommen werden kann. Die komplette Außenseite der Filterpatrone, die beispielsweise beim Einsetzen angefasst wird und somit Kontaminationen ausgesetzt ist, stellt somit die "unreine" Seite des Filters dar, während die reine Seite des Filters im Inneren der Filterpatrone vor Umwelteinflüssen und Kontamination geschützt ist.

Das Filtergehäuse kann zum Austausch und zum Einsetzen einer Filterpatrone geöffnet oder abgenommen werden. Vorzugsweise kann hierzu das Filtergehäuse mit einem Schlauch- oder Bajonettverschluss versehen sein, mit dem es an einem nach unten weisenden Aufnahmesockel am vom Armaturenkörper entfernten Ende des zweiten Auslaufs gehalten ist. Dies ermöglicht einen einfachen und benutzerfreundlichen Austausch des Trinkwasserfilters.

Zur Verbesserung der Bedienbarkeit und Flexibilität der Armatur kann vorzugsweise vorgesehen sein, dass der zweite Auslauf gegenüber dem Armaturenkörper schwenkbar ist. Er kann somit in eine Position geschwenkt werden, in der er, beispielsweise beim Abwasch oder anderweitigen Gebrauch der Armatur, dem ersten Auslauf für Brauchwasser nicht im Wege ist.

Der zweite Auslauf kann insbesondere über eine konzentrisch um den ersten Auslauf ausgebildete, ringförmige Schulter mit dem Armaturenkörper drehbar verbunden sein.

Der Ventileinsatz am Armaturenkörper kann insbesondere als Mischventil ausgebildet sein. Die Armatur weist somit einen Warmwasser- und einen Kaltwasserzulauf auf, die zu dem Mischventil führen. Der erste Wasserweg führt somit vom Mischventil kommendes Mischwasser. Der zweite Wasserweg zweigt dagegen direkt von dem Kaltwasserzulauf ab und führt Kaltwasser. Alternativ ist es auch möglich, die Armatur mit einem dritten Wasserzulauf auszubilden, über den Wasser, beispielsweise von einer unter der Arbeitsplatte angeordneten Kühlvorrichtung zugeführt und über den zweiten Auslauf als gekühltes und gefiltertes Wasser ausgegeben wird.

Bei einer weiteren Ausführungsform der Erfindung ist in dem Filtergehäuse eine elektronische Zählervorrichtung integriert und bei dem Filtergehäuse eine mit der Zählervorrichtung verbundene optische Anzeige angeordnet, welche einen Funktionszustand einer in das Filtergehäuse eingesetzten Filterpatrone anzeigt. Da der Filtereinsatz üblicherweise nach einer bestimmten Gebrauchsdauer erschöpft bzw. unbrauchbar wird, kann somit sichergestellt werden, dass rechtzeitig dem Benutzer angezeigt wird, dass ein neuer Filtereinsatz eingesetzt werden soll. Die Zählervorrichtung kann insbesondere einen Durchflussmesser umfassen, sodass in Abhängigkeit der Menge des gezapften gefilterten Trinkwassers ein Austausch der Filterpatrone angezeigt werden kann. Alternativ kann auch lediglich ein Timer vorgesehen sein, der jeweils nach Anlauf einer vorgegebenen Zeitspanne einen Filteraustausch signalisiert.

Als besonders bevorzugte Maßnahme ist im Rahmen der vorliegenden Erfindung vorgesehen, dass die Mündungsöffnung am Boden des Filtergehäuses ein an der Filterpatrone angeordnetes Mündungsstück aufnimmt, aus welchem gefiltertes Wasser aus der Filterpatrone austritt. Indem das Wasser aus einem an der Filterpatrone angeordnetem Mündungsstück austritt, ist jeder Kontakt des gefilterten Wassers auf der "reinen" Seite der Filterpatrone mit jedweden Teilen der Armatur ausgeschlossen, sodass eine Rekontamination des gefilterten Wassers hinter der Filterpatrone unmöglich ist.

Das an der Filterpatrone angeordnete Mündungsstück kann im Auslieferungszustand mittels einer Abreißfolie steril versiegelt sein. Diese wird erst entfernt, wenn die Filterpatrone in das Filtergehäuse eingesetzt wird. Somit ist der hygienisch einwandfreie Zustand der Filterpatrone gewährleistet.

Bevorzugt ist außerdem, wenn das Mündungsstück zusätzlich einen integrierten Strahlregler umfasst. Ein solcher Strahlregler ist üblicherweise am Auslauf einer Armatur angeordnet und sorgt dafür, dass das Wasser mit der gewünschten Strahlcharakteristik, gegebenenfalls belüftet, aus dem Auslauf austritt. Ein solcher Strahlregler ist konstruktionsbedingt besonders anfällig für die Anlagerung von Verschmutzungen und kann eine Quelle von Keimbildung innerhalb der Armatur darstellen. Indem dieser Strahlregler nun integriert mit der Filterkartusche als Einwegartikel ausgebildet ist, entfällt dieser als Quelle für Keimbildung, ohne auf die mit einem Strahlregler verbundene Komfortfunktion verzichten zu müssen.

Weitere Vorteile und Ausgestaltungen der vorliegenden Erfindung ergeben sich aus der nachfolgenden Beschreibung bevorzugter Ausführungsbeispiele anhand der Figuren. Diese zeigen:
- Figur 1: eine isometrische Darstellung einer Wasserauslaufarmatur mit separaten Auslässen für Brauchwasser und gefiltertes Trinkwasser,
- Figur 2: einen Schnitt durch Filtergehäuse und Auslass für gefiltertes Wasser der Armatur aus Figur 1,

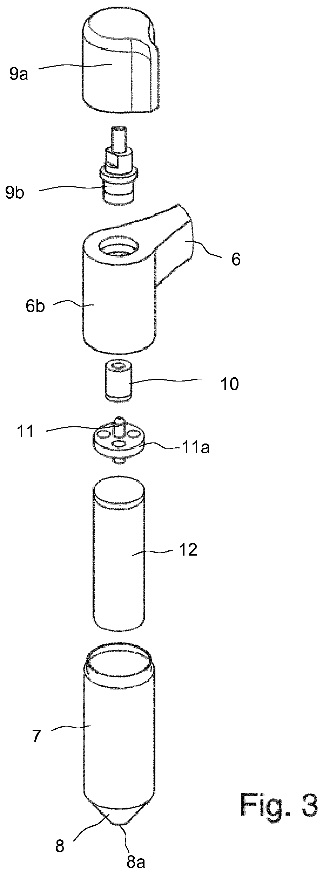

- Figur 3: eine Explosionszeichnung des Filtergehäuses aus Figur 2,
- Figur 4a: einen Schnitt im Detail durch ein im Filtergehäuse vorhandenes Rückschlagventil,
- Figur 4b: das Rückschlagventil aus Figur 4a bei abgenommener Filterpatrone
- Figur 5: ein Schnitt durch Filtergehäuse und Filterauslass in einem zweiten Ausführungsbeispiel und
- Figur 6: eine isometrische Darstellung einer im dem zweiten Ausführungsbeispiel verwendbaren Filterpatrone.

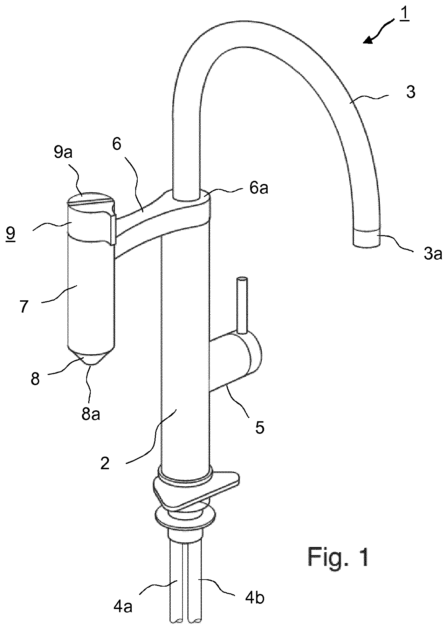

Die in Figur 1 gezeigte Wasserauslaufarmatur 1 umfasst einen Armaturenkörper 2, der auf einer Arbeitsplatte oder einer Küchenspüle verschraubt wird. Nach oben hin erstreckt sich aus dem Armaturenkörper 2 ein gebogener Wasserauflauf 3 mit einem Mündungsstück 3a herkömmlicher Bauart, beispielsweise einem Strahlregler. Der Wasserauslauf 3 dient als Auslauf für Brauchwasser. Als Brauchwasser wird im Rahmen der Erfindung Warmwasser, Kaltwasser oder Mischwasser verstanden, wie es aus der öffentlichen Wasserversorgung oder einer hauseigenen Wasserversorgung bezogen wird, welches aber keine bzw. fragliche Trinkwasserqualität aufweist.

Die Wasserauslaufarmatur 1 hat zwei Zuleitungen 4a, 4b für Warmwasser und Kaltwasser sowie einen Ein-Hebel-Mischer 5 mit entsprechendem Ventileinsatz, mit dem das zugeführte Warm- und Kaltwasser gemischt und über den Wasserauslauf 3 ausgegeben werden kann. Innerhalb des Armaturenkörpers 2 führen somit in an sich ebenfalls bekannter Weise Wasserwege von den Zuleitungen 4a, 4b zum Mischventil 5 und von dort zum Wasserauslauf 3.

Im oberen Bereich des Armaturenkörpers 2 zweigt (in diesem Fall in etwa waagerecht, ohne dass die Erfindung jedoch hierauf beschränkt wäre) eine zweite Auslaufleitung 6 ab, an deren Ende ein senkrecht nach unten weisendes Filtergehäuse 7 angeordnet ist. Im Bereich der Abzweigung ist die Auslaufleitung 6 in Form einer ringförmigen Schulter 6a ausgebildet, die konzentrisch um die nach oben weisende Auslaufleitung 3 liegt und um die Mittelachse des Armaturenkörpers 2 schwenkbar ist. Ein Wasserweg für Kaltwasser verläuft innenseitig des Armaturenkörpers 2 zu der Schulter 6a und mündet dort in einem innerhalb der Schulter 6a ausgebildeten, umfangseitig offenen und gegenüber der Schulter 6a gleitend gedichteten Ringraum, über den das Wasser in den zweiten Auslauf 6 gelangt.

Ebenso wäre es möglich, einen separaten, dritten Wasserzulaufanschluss (nicht gezeigt) an der Unterseite des Armaturenkörpers 2 vorzusehen, der über einen Wasserweg innerhalb des Armaturenkörpers 2 mit dem Auslauf 6 korrespondiert. Ein solcher dritter Zulaufanschluss ist beispielsweise sinnvoll, wenn das über den Wasserfilter ausgegebene Trinkwasser zuvor in einem unter der Arbeitsplatte installierten Kühler vorgekühlt werden soll. Wenn in diesem Falle die Armatur ohne Kühler installiert wird, können der Zulaufanschluss für Kaltwasser und der mit dem Filterausgang korrespondierende dritte Zulaufanschluss einfach unterhalb einer Arbeitsplatte über ein separates T-Stück mit der Zulaufleitung für Kaltwasser verbunden werden.

Das Filtergehäuse 7 ist in etwa zylindrisch ausgebildet und läuft zu seinem Boden 8 hin kegelförmig zusammen. In der Mitte dieses kegelförmigen Bodenbereichs 8 befindet sich eine Mündungsöffnung 8a, aus der gefiltertes Trinkwasser ausgegeben werden kann. Hierzu ist im oberen Bereich des Filtergehäuses 7 ein Ventil 9 mit einem Drehgriff 9a angeordnet. Wird dieses Ventil 9 geöffnet, so strömt Wasser über die Auslaufleitung 6 in einen äußeren Ringbereich 7a des Filtergehäuses 7, dringt durch den im Filtergehäuse 7 eingesetzten Trinkwasserfilter hindurch und wird axial über die Mündungsöffnung 8a ausgegeben.

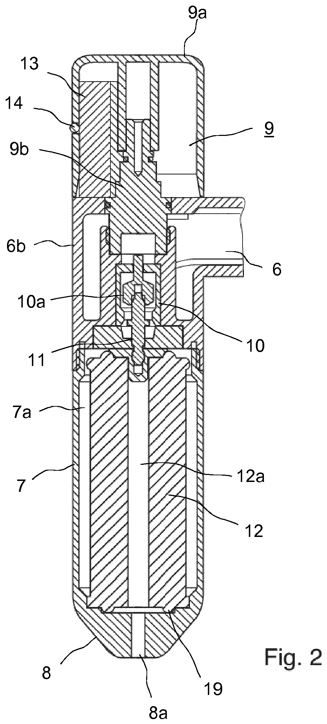

In Figur 2 ist das Filtergehäuse 7 vergrößert in einem Längsschnitt dargestellt. Im oberen Bereich ist das Schließventil 9 mit seinem Ventilgriff 9a und einem darunter befindlichen Ventileinsatz 9b zu sehen. Durch Drehen des Ventilgriffs 9a wird eine Spindel des Ventileinsatzes 9b betätigt und das Ventil 9 gibt den Wasserweg von der Auslaufleitung 6 kommend ins Ventilgehäuse 7 frei.

Zwischen dem Ventileinsatz 9b und dem Ventilgehäuse 7 befindet sich außerdem ein Rückschlagventil 10 mit einem Schließkörper 10a, der von einem Bestätigungsstift 11 nach oben in seiner geöffneten Stellung gehalten wird. Der Bestätigungsstift 11 wiederum wird von einer in das Filtergehäuse 7 eingesetzten Filterpatrone 12 nach oben gehalten, sodass das Rückschlagventil 10 bei eingesetzter Filterpatrone 12 und aufgeschraubtem Filtergehäuse 7 geöffnet ist.

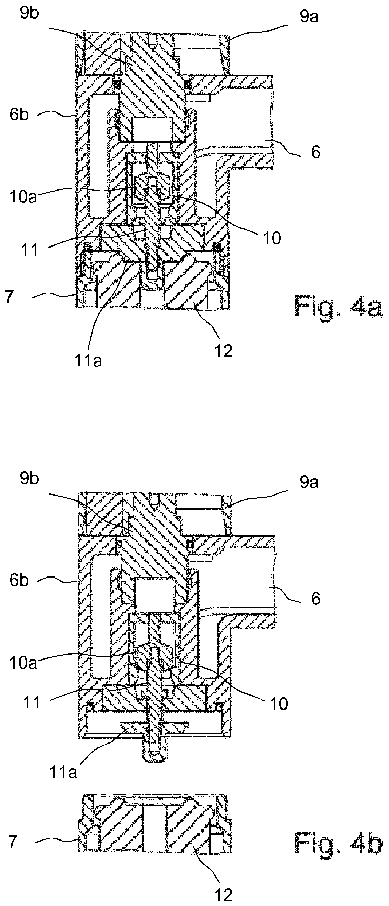

Am Ende der Wasserauslaufleitung 6 ist ein nach unten weisender Aufnahmesockel 6b für das Filtergehäuse 7 angeformt, an dem dieses mittels eines Schraub- oder Bajonett-Verschlusses wasserdicht befestigt ist. Wird das Filtergehäuse 7 abgenommen, um den Filtereinsatz 12 zu wechseln, so wird durch den Wasserdruck oder alternativ eine (hier nicht gezeigte) Schließfeder der Ventilkörper 10a nach unten in seine Schließstellung bewegt, sodass kein Wasser aus dem Auslauf 6 austreten kann. Öffnungsstellung und Schließstellung des Rückschlagventils bei eingesetzter bzw. abgenommener Ventilpatrone sind in den Figuren 4a und 4b nochmals vergrößert dargestellt. Man erkennt in Figur 4b insbesondere den in Richtung seines unteren Anschlags bewegten Bestätigungsstift 11 mit einer Bestätigungsscheibe 11a, welche in eine korrespondierende Ausnehmung 12a im oberen Bereich der Filterpatrone 12 in Eingriff gelangt und von dieser nach oben gehalten wird, wenn die Filterpatrone 12, wie in Figur 4a gezeigt, eingesetzt und mittels des Filtergehäuses 7 aufgeschraubt wird.

Im Betrieb fließt Wasser aus der Auslaufleitung 6 bei geöffnetem Ventil 9 und eingesetzter Filterpatrone 12 in einen äußeren Ringraum 7a des Filtergehäuses 7. Von dort durchströmt es das Filtermaterial der eingesetzten Filterpatrone 12 und gelangt in einen axialen Hohlraum 12a der Filterpatrone. Von dort fließt es über die Mündungsöffnung 8a im Boden 8 des Filtergehäuses 7 aus dem Auslass der Armatur heraus, beispielsweise in ein von einem Benutzer darunter platziertes Trinkgefäß.

Als eine zusätzliche (optionale) Funktion ist in die Ventilkappe 9a eine batteriebetriebene elektrische Schaltung 13 integriert, die über eine mehrfarbige Leuchtdiode 14 Auskunft über den Zustand des Filtereinsatzes 12 gibt. Im Ausführungsbeispiel enthält die Schaltung 13 lediglich einen Timer, der nach Austausch der Filterpatrone 12 zurückgesetzt wird und nach Ablauf einer voreingestellten Betriebszeit für die Filterpatrone 12 an einen Austausch erinnert. Möglich ist jedoch alternativ oder kumulativ auch die Verwendung eines im Wasserweg angeordneten Durchflussmessers, beispielsweise in Form eines Flügelradzählers, so dass ein Austausch der Filterpatrone 12 in Abhängigkeit der gefilterten Wassermenge angezeigt werden kann. Solange die Filterpatrone 12 in innerhalb ihrer vorgesehenen Verwendungsdauer ist, blinkt die Leuchtdiode 14 grün (z.B. alle 5 sec). Nach Ablauf der vorgesehenen Verwendungsdauer, wenn also ein Austausch der Filterpatrone 12 empfohlen wird, wechselt die Farbe der Leuchtdiode 14 auf rot. Ist ein Austausch der Filterpatrone überfällt und die Trinkqualität des Filterwassers somit nicht mehr gewährleistet, so wird als Warnung zusätzlich die Blinkfrequenz erhöht, z.B. schnelles Blinken 1x pro Sekunde.

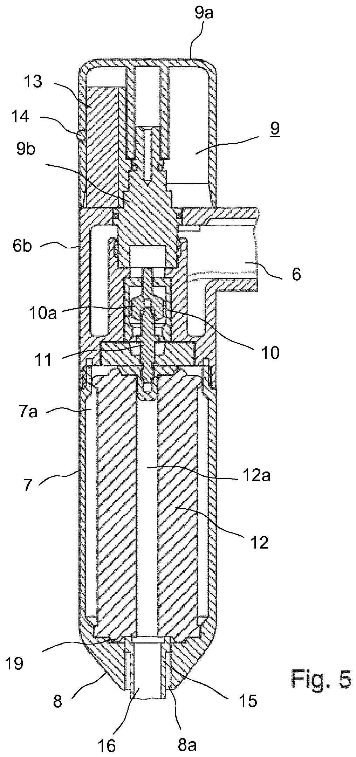

Ein zweites Ausführungsbeispiel des Filterauslaufs mit seinem Filtergehäuse 7 ist in Figur 5 gezeigt. Gleiche und gleichwirkende Teile sind hierbei mit gleichen Bezugszeichen wie im ersten Ausführungsbeispiel versehen. Die Filterpatrone 12 weist im zweiten Ausführungsbeispiel am unteren Ende einen um den axialen Hohlraum 12a liegenden Kragen 15 auf, der als Mündungsstück dient. Der Kragen 15 ist so bemessen, dass er in die in diesem Fall größer ausgeführte Mündungsöffnung 8a im Boden 8 des Filtergehäuses 7 hindurch passt. Im Inneren des Kragens 15 ist ein sogenannter Strahlregler 16 oder Luftsprudler angeordnet. Dieser sorgt dafür, dass Wasser aus dem Inneren der Filterpatrone 12 zu einem Wasserstrahl geformt und mit Luftblasen vermischt austritt. Indem Luftsprudler 16 und Mündungssöffnung mit dem diese umgebenden Kragen bzw. Mündungsstück 15 direkt einstückig an die Filterpatrone 12 angeformt sind, ist in diesem Fall jeder Kontakt von Wasser mit dem Filtergehäuse 7 oder anderen Leitungs- oder Armaturenteilen nach der Filterung ausgeschlossen. Filterpatrone 12 und der integrierte Luftsprudler 16 sind als Einwegteil ausgelegt und werden nach einer vorgesehenen Betriebsdauer aus hygienischen Gründen ausgetauscht. Somit ist das von der Armatur ausgegebene gefilterte Wasser stets hygienisch einwandfrei.

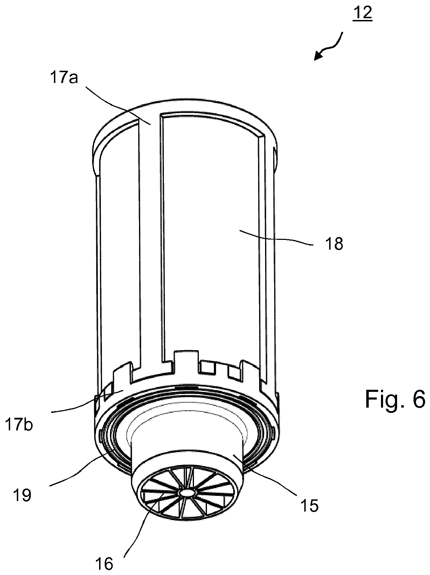

Eine Filterpatrone 12 ist beispielhaft in Figur 6 dargestellt. Sie umfasst ein skelettiertes, zweiteiliges Spritzgussgehäuse17a, 17b, bei dem die Mantelfläche als filteraktive Fläche großflächig ausgespart ist. Die Gehäuseteile 17a, 17b sind bodenseitig miteinander verschnappt bzw. verrastet. Die Mantelfläche des zylindrischen Filtereinsatzes 12 ist mit einer mit Nanoöffnungen (Nanoporen) versehenen Membran 18 versehen. Eine solche "Nanomembran" ist beispielsweise in der Schrift WO 2012/097967 A1 beschrieben, auf die zur Vermeidung unnötiger Wiederholungen hiermit vollinhaltlich Bezug genommen wird. Die Nanoöffnungen in der Membran sorgen für einen ausreichenden Wasserdurchtritt. Im Wasser enthaltene Mikropartikel wie etwa mikrobiologische Verunreinigungen werden jedoch zurückgehalten.

Außer der Nanomembran umfasst die Filterpatrone zusätzlich ein zu äußerst liegendes Filtervlies als Vorfilter für Schwebstoffe, eine innenliegende Aktivkohleschicht sowie vorzugsweise noch eine weitere Lage mit biologisch aktiven Silberpartikeln. Diese Kombination sorgt für eine mikrobiologisch einwandfreie, sterile Filterung von Trinkwasser. Die obere Stirnfläche des zylindrischen Filtereinsatzes 12 ist wasserdicht verschlossen. Sie dient wie bereits erläutert dazu, über den Bestätigungsstift 11 das Rückschlagventil 10 in Offenstellung zu halten. An der Unterseite besitzt der Filtereinsatz 12 außerdem eine ringförmige, um das Mündungsstück 15 liegende Dichtung 19, welche die Filterpatrone 12 gegen den Boden 8 des Filtergehäuses 7 abdichtet. Somit kann in das Filtergehäuse 7 aus der Auslaufleitung 6 eingeströmtes Wasser lediglich nach Durchdringen der filteraktiven Schichten in den axialen Innenraum 12a der Filterpatrone 12 gelangen und von dort aus durch das an der Filterpatrone angebrachte Mündungsstück 15 ausfließen.

## Patentansprüche

1. Multifunktionale Wasserauslaufarmatur (1) zur wahlweisen Abgabe von Brauchwasser und gefiltertem Trinkwasser, welche einen Armaturenkörper (2) mit mindestens einem Wasserzulauf (4a, 4b), einen von dem Armaturenkörper (2) abweisenden ersten Auslauf (3) für Brauchwasser, einen von dem Armaturenkörper (2) abzweigenden zweiten Auslauf (6) für gefiltertes Trinkwasser und einen von Wasser durchströmbaren Filteraufnahmeraum für eine als Trinkwasserfilter dienende Filterpatrone (12) aufweist, der mit dem zweiten Auslauf (6) in wasserführender Verbindung steht, wobei am Armaturenkörper (2) ein Ventileinsatz (5) mit einem Ventil zur Regelung eines Wasserflusses von Brauchwasser aus dem ersten Auslauf (3) vorgesehen ist und der Armaturenkörper (2) einen ersten Wasserweg von dem Ventil (5) zu dem ersten Auslauf (3) aufweist, wobei
der Filteraufnahmeraum von einem Filtergehäuse (7) gebildet wird, das an dem von dem Armaturenkörper (2) abgewandten Ende des zweiten Auslaufs (6) angeordnet ist, und das Filtergehäuse (7) einen nach unten weisenden Boden (8) aufweist, in welchem eine Mündungsöffnung (8a) ausgebildet ist, aus der gefiltertes Trinkwasser entnehmbar ist,
der Armaturenkörper (2) einen zweiten Wasserweg von dem Wasserzulauf (4a) unter Umgehung des Ventils (5) zu dem zweiten Auslauf (6) aufweist, und wobei
zwischen dem zweiten Auslauf (6) und dem Filtergehäuse (7) ein Schließventil (9) zum Absperren und Freigeben einer Ausgabe von gefiltertem Wasser angeordnet ist,
**dadurch gekennzeichnet, dass**
zwischen dem zweiten Auslauf (6) und dem Filtergehäuse (7) ein Rückschlagventil (10) mit einem Absperrelement (10a) angeordnet ist, welches durch eine in das Filtergehäuse (7) eingesetzte Filterpatrone (12) in einer Öffnungsstellung gehalten wird, in der ein Wasserweg von dem zweiten Auslauf (6) in das Filtergehäuse (7) freigegeben ist, und welches bei Fehlen einer Filterpatrone (12) unter Wirkung einer Schließfeder oder des Wasserdrucks in eine Schließstellung bewegt wird, in der es den Wasserweg zwischen zweitem Auslauf (6) und Filtergehäuse (7) versperrt.

2. Wasserauslaufarmatur nach Anspruch 1, bei der das Filtergehäuse (7) als ein vorzugsweise zylinderförmiges Gehäuse mit gegenüber dem zweiten Auslauf (6) vergrößerten Querschnitt ausgebildet ist, in dessen oberen Bereich der zweite Auslauf (6) einmündet.

3. Wasserauslaufarmatur nach einem der vorangehenden Ansprüche, bei der das Filtergehäuse (7) zylindrisch ausgebildet ist, derart, dass Brauchwasser von dem zweiten Auslauf (6) in einen äußeren Ringraum (7a) strömt, eine in das Filtergehäuse (7) eingesetzte zylindrische Filterpatrone (12) durchdringt und in axialer Richtung mittig aus der im Boden (8) des Filtergehäuses (7) ausgebildeten Mündungsöffnung (8a) austritt.

4. Wasserauslaufarmatur nach einem der vorangehenden Ansprüche, bei der das Filtergehäuse (7) zum Austausch und zum Einsetzen einer Filterpatrone (12) geöffnet oder abgenommen werden kann.

5. Wasserauslaufarmatur nach dem vorangehenden Anspruch, bei der das Filtergehäuse (7) mit einem Schraub- oder Bajonettverschluss versehen ist, mit dem es an einem nach unten weisenden Aufnahmesockel (6b) am vom Armaturenkörper (2) entfernten Ende des zweiten Auslaufs (6) gehalten ist.

6. Wasserauslaufarmatur nach einem der vorangehenden Ansprüche, bei der der zweite Auslauf (6) gegenüber dem Armaturenkörper (2) schwenkbar ist.

7. Wasserauslaufarmatur nach einem der vorangehenden Ansprüche, bei der der zweite Auslauf (6) über eine konzentrisch um den ersten Auslauf (3) ausgebildete, ringförmige Schulter (6a) mit dem Armaturenkörper (2) drehbar verbunden ist.

8. Wasserauslaufarmatur nach einem der vorangehenden Ansprüche, bei der der Ventileinsatz (5) als Mischventil ausgebildet ist, wobei die Wasserauslaufarmatur (1) einen Warmwasser- (4b) und einen Kaltwasserzulauf (4a) aufweist, die zu dem Mischventil (5) führen, wobei der erste Wasserweg von dem Mischventil (5) kommendes Mischwasser führt und der zweite Wasserweg von dem Kaltwasserzulauf (4a) abzweigt und Kaltwasser führt.

9. Wasserauslaufarmatur nach einem der vorangehenden Ansprüche, bei der in dem Filtergehäuse (7) eine elektronische Zählervorrichtung (13) integriert und an dem Filtergehäuse (7) eine mit der Zählervorrichtung (13) verbundene optische Anzeige (14) angeordnet ist, welche einen Funktionszustand einer in das Filtergehäuse (7) eingesetzten Filterpatrone (12) anzeigt.

10. Wasserauslaufarmatur nach Anspruch 9, bei der die Zählvorrichtung (13) einen Timer und/oder einen Durchflussmesser umfasst.

11. Wasserauslaufarmatur nach einem der vorangehenden Ansprüche, bei der die Mündungsöffnung (8a) ein an der Filterpatrone (12) angeordnetes Mündungsstück (15) aufnimmt, aus welchem gefiltertes Wasser aus der Filterpatrone (12) austritt.

12. Wasserauslaufarmatur nach Anspruch 11, bei der das an der Filterpatrone (12) angeordnete Mündungsstück (15) im Auslieferungszustand mittels einer Abreißfolie steril versiegelt ist.

13. Wasserauslaufarmatur nach Anspruch 11 oder 12, bei der das Mündungsstück (15) einen integrierten Strahlregler (16) enthält.

## Claims

1. Multi-functional water outlet fitting (1) for selectively dispensing non-potable water and filtered drinking water, which water outlet fitting comprises a fitting body (2) having at least one water inlet (4a, 4b); a first outlet (3), which points away from the fitting body (2), for non-potable water; a second outlet (6), which branches off from the fitting body (2), for filtered drinking water; and a filter-receiving space for a filter cartridge (12) serving as drinking water filter, through which water is able to flow and which is in water-conducting communication with the second outlet (6), there being provided on the fitting body (2) a valve insert (5) having a valve for controlling a flow of non-potable water out of the first outlet (3), and the fitting body (2) having a first water pathway from the valve (5) to the first outlet (3), wherein
the filter-receiving space is formed by a filter housing (7) which is arranged at the end of the second outlet (6) remote from the fitting body (2), and the filter housing (7) has a downward-facing base (8) in which there is formed a mouth opening (8a) from which the filtered drinking water can be dispensed,
the fitting body (2) has a second water pathway from the water inlet (4a) to the second outlet (6), with the valve (5) being bypassed, and wherein
between the second outlet (6) and the filter housing (7) there is arranged a closure valve (9) for blocking and enabling discharge of filtered water,
**characterised in that**
between the second outlet (6) and the filter housing (7) there is arranged a non-return valve (10) having a blocking element (10a) which is held in an open position by a filter cartridge (12) installed in the filter housing (7), in which open position a water pathway from the second outlet (6) to the filter housing (7) is unblocked, and which in the absence of a filter cartridge (12) is moved into a closed position under the action of a closing spring or the water pressure, in which closed position the water pathway between the second outlet (6) and the filter housing (7) is blocked.

2. Water outlet fitting according to claim 1, wherein the filter housing (7) is in the form of a preferably cylindrical housing which is larger in cross-section than the second outlet (6) and into the upper region of which the second outlet (6) opens.

3. Water outlet fitting according to either one of the preceding claims, wherein the filter housing (7) is of cylindrical construction such that non-potable water flows from the second outlet (6) into an outer annular space (7a), passes through a cylindrical filter cartridge (12) installed in the filter housing (7) and is discharged in the axial direction centrally from the mouth opening (8a) formed in the base (8) of the filter housing (7).

4. Water outlet fitting according to any one of the preceding claims, wherein the filter housing (7) can be opened or removed for replacement or installation of a filter cartridge (12).

5. Water outlet fitting according to the preceding claim, wherein the filter housing (7) is provided with a screw closure or bayonet closure with which it is held against a downward-facing receiving base (6b) at the end of the second outlet (6) remote from the fitting body (2).

6. Water outlet fitting according to any one of the preceding claims, wherein the second outlet (6) is pivotable relative to the fitting body (2).

7. Water outlet fitting according to any one of the preceding claims, wherein the second outlet (6) is pivotally connected to the fitting body (2) by means of an annular shoulder (6a) formed concentrically around the first outlet (3).

8. Water outlet fitting according to any one of the preceding claims, wherein the valve insert (5) is in the form of a mixer valve, wherein the water outlet fitting (1) has a hot water inlet (4b) and a cold water inlet (4a) which lead to the mixer valve (5), and wherein the first water pathway conducts mixed water coming from the mixer valve (5) and the second water pathway branches off from the cold water inlet (4a) and conducts cold water.

9. Water outlet fitting according to any one of the preceding claims, wherein an electronic meter device (13) is integrated in the filter housing (7), and on the filter housing (7) there is arranged an optical display (14) which is connected to the meter device (13) and which displays an operating state of a filter cartridge (12) installed in the filter housing (7).

10. Water outlet fitting according to claim 9, wherein the meter device (13) comprises a timer and/or a flow meter.

11. Water outlet fitting according to any one of the preceding claims, wherein the mouth opening (8a) accommodates a nozzle (15) which is arranged on the filter cartridge (12) and from which filtered water is discharged from the filter cartridge (12).

12. Water outlet fitting according to claim 11, wherein in the delivered state the nozzle (15) arranged on the filter cartridge (12) is sterilely sealed by means of a tear-off film.

13. Water outlet fitting according to claim 11 or 12, wherein the nozzle (15) contains an integrated aerator (16).

## Revendications

1. Robinetterie multifonctionnelle (1) d'écoulement d'eau, conçue pour délivrer sélectivement de l'eau à usage sanitaire et de l'eau potable filtrée, munie d'un corps (2) comprenant au moins une arrivée d'eau (4a, 4b), une première sortie (3) destinée à de l'eau à usage sanitaire et déportée du corps (2) de la robinetterie, une seconde sortie (6) destinée à de l'eau potable filtrée et bifurquant dudit corps (2) de la robinetterie, et un logement de filtre qui peut être parcouru par de l'eau, est dédié à une cartouche filtrante (12) remplissant la fonction d'un filtre à eau potable, et est en communication de canalisation d'eau avec ladite seconde sortie (6), sachant qu'une pièce intégrée de distribution (5), pourvue d'une vanne affectée à la régulation d'un flux d'eau à usage sanitaire provenant de la première sortie (3), est prévue sur le corps (2) de la robinetterie, lequel corps (2) de la robinetterie présente un premier trajet de circulation d'eau partant de ladite vanne (5) et gagnant ladite première sortie (3), sachant que
le logement de filtre est constitué d'un carter de filtre (7) disposé à l'extrémité de la seconde sortie (6) qui pointe à l'opposé du corps (2) de la robinetterie, et ledit carter de filtre (7) est doté d'un fond (8) orienté vers le bas, dans lequel est pratiqué un orifice d'embouchure (8a) à partir duquel de l'eau potable filtrée peut être prélevée,
ledit corps (2) de la robinetterie présentant un second trajet de circulation d'eau partant de l'arrivée d'eau (4a) et gagnant la seconde sortie (6), avec contournement de la vanne (5), et sachant
qu'une vanne de fermeture (9) est interposée entre ladite seconde sortie (6) et le carter de filtre (7), et vue de bloquer et de libérer une délivrance d'eau filtrée,
**caractérisée par le fait**
**qu'**un clapet antiretour (10), interposé entre la seconde sortie (6) et le carter de filtre (7), est pourvu d'un élément d'isolement (10a) qui est maintenu, par une cartouche filtrante (12) insérée dans ledit carter de filtre (7), dans une position d'ouverture dans laquelle un trajet de circulation d'eau partant de ladite seconde sortie (6) et pénétrant dans ledit carter de filtre (7) est libéré, et qui est mû en l'absence d'une cartouche filtrante (12), sous l'action d'un ressort de fermeture ou sous l'effet de la pression de l'eau, vers une position de fermeture dans laquelle il bloque ledit trajet de circulation d'eau entre ladite seconde sortie (6) et ledit carter de filtre (7).

2. Robinetterie d'écoulement d'eau selon la revendication 1, dans laquelle le carter de filtre (7) est réalisé sous la forme d'un carter préférentiellement cylindrique de section transversale agrandie par rapport à la seconde sortie (6), dans la région supérieure duquel ladite seconde sortie (6) débouche.

3. Robinetterie d'écoulement d'eau selon l'une des revendications précédentes, dans laquelle le carter de filtre (7) est de réalisation cylindrique, de telle sorte que de l'eau à usage sanitaire afflue dans un espace annulaire extérieur (7a) à partir de la seconde sortie (6), traverse une cartouche filtrante cylindrique (12) insérée dans ledit carter de filtre (7) et sorte centralement, dans la direction axiale, de l'orifice d'embouchure (8a) pratiqué dans le fond (8) dudit carter de filtre (7).

4. Robinetterie d'écoulement d'eau selon l'une des revendications précédentes, dans laquelle le carter de filtre (7) peut être ouvert ou déposé en vue du remplacement et de l'insertion d'une cartouche filtrante (12).

5. Robinetterie d'écoulement d'eau selon la revendication précédente, dans laquelle le carter de filtre (7) est muni d'une fermeture à vissage ou à baïonnette par laquelle il est retenu sur une embase réceptrice (6b), orientée vers le bas, à l'extrémité de la seconde sortie (6) qui est éloignée du corps (2) de ladite robinetterie.

6. Robinetterie d'écoulement d'eau selon l'une des revendications précédentes, dans laquelle la seconde sortie (6) peut pivoter par rapport au corps (2) de ladite robinetterie.

7. Robinetterie d'écoulement d'eau selon l'une des revendications précédentes, dans laquelle la seconde sortie (6) est reliée au corps (2) de ladite robinetterie, avec faculté de rotation, par l'intermédiaire d'un épaulement annulaire (6a) ménagé concentriquement autour de la première sortie (3).

8. Robinetterie d'écoulement d'eau selon l'une des revendications précédentes, dans laquelle la pièce intégrée de distribution (5) est réalisée en tant que vanne mitigeuse, ladite robinetterie (1) d'écoulement d'eau comportant des arrivées d'eau chaude (4b) et d'eau froide (4a) menant à ladite vanne mitigeuse (5), sachant que le premier trajet de circulation d'eau canalise de l'eau mitigée émanant de ladite vanne mitigeuse (5) et que le second trajet de circulation d'eau bifurque de l'arrivée (4a) d'eau froide, et canalise de l'eau froide.

9. Robinetterie d'écoulement d'eau selon l'une des revendications précédentes, dans laquelle un dispositif électronique de comptage (13) est intégré dans le carter de filtre (7) et un affichage optique (14), connecté audit dispositif de comptage (13) et affichant un état fonctionnel d'une cartouche filtrante (12) insérée dans ledit carter de filtre (7), est implanté sur ledit carter de filtre (7).

10. Robinetterie d'écoulement d'eau selon la revendication 9, dans laquelle le dispositif de comptage (13) inclut une minuterie et/ou un débitmètre.

11. Robinetterie d'écoulement d'eau selon l'une des revendications précédentes, dans laquelle l'orifice d'embouchure (8a) reçoit un embout (15) disposé sur la cartouche filtrante (12), à partir duquel de l'eau filtrée sort de ladite cartouche filtrante (12).

12. Robinetterie d'écoulement d'eau selon la revendication 11, dans laquelle l'embout (15) disposé sur la cartouche filtrante (12) est scellé de manière stérile, à l'état de livraison, au moyen d'un film arrachable.

13. Robinetterie d'écoulement d'eau selon la revendication 11 ou 12, dans laquelle l'embout (15) renferme un régulateur de jets (16) intégré.
